# EUROPÄISCHE PATENTANMELDUNG

(11) **EP 4 835 396 A1**
(43) Veröffentlichungstag der Anmeldung: **04.11.2026**
(21) Anmeldenummer: 26167786.8
(22) Anmeldetag: 25.03.2026
(51) Int. Cl.: G01B 11/24, B23Q 17/09, B23Q 17/24, G01S 17/06, G01S 17/95

(54) **WERKZEUGEINSTELL- UND WERKZEUGMESSGERÄT, VERFAHREN MIT DEM WERKZEUGEINSTELL- UND WERKZEUGMESSGERÄT UND RECHENEINHEIT**

(30) Priorität: 28.04.2025 DE 102025116253
(71) Anmelder: E. Zoller GmbH & Co. KG Einstell- und Messgeräte, 74385 Pleidelsheim (DE)
(72) Erfinder: Ali M. Mansoory K., 74385 Pleidelsheim (DE)
(74) Vertreter: Daub, Thomas

(57) **Zusammenfassung**

Die Erfindung geht aus von einem Werkzeugeinstell- und Werkzeugmessgerät (24) mit einer, einen Messbereich aufweisenden und/oder ausbildenden, Messanordnung (14) zu einer berührungslosen Vermessung von in dem Messbereich positionierten Werkzeugen (10), Werkzeugaufnahmen (12) oder Werkzeugpaletten (40) oder von in dem Messbereich positionierten Teilen von Werkzeugen (10), Werkzeugaufnahmen (12) oder Werkzeugpaletten (40), und mit einer Halteeinheit (16) zumindest zu einer Halterung zumindest einer der mit einem der Werkzeuge (10) bestückten Werkzeugaufnahmen (12) oder einer mit Werkzeugen (10) und/oder Werkzeugaufnahmen (12) bestückten Werkzeugpalette (40) in dem Messbereich.

Es wird vorgeschlagen, dass die Messanordnung (14) zumindest einen 3D-Timeof-Flight (ToF)-Sensor (20) zu einer Durchführung der berührungslosen dreidimensionalen Vermessung aufweist, wobei der 3D-ToF-Sensor (20) dazu vorgesehen ist, Messsignale in Form elektromagnetischer Wellen auszusenden, wobei der 3D-ToF-Sensor (20) dazu vorgesehen ist, Reflexionssignale der Messsignale zu empfangen, und wobei eine interne Recheneinheit (22) des Werkzeugeinstell- und Werkzeugmessgeräts (24) dazu vorgesehen ist, zumindest die Reflexionssignale zur Ermittlung von 3D-Daten auszuwerten.

## Beschreibung

### Stand der Technik

Die Erfindung betrifft ein Werkzeugeinstell- und Werkzeugmessgerät nach dem Oberbegriff des Anspruchs 1, ein Verfahren nach dem Oberbegriff des Anspruchs 10 und eine Recheneinheit nach dem Anspruch 19.

Es sind bereits Werkzeugeinstell- und Werkzeugmessgeräte zu einem Einstellen/Voreinstellen von Werkzeugen in Werkzeugaufnahmen außerhalb einer Werkzeugmaschine und zu einem Erfassen von Werkzeugabmessungen der in den Werkzeugaufnahmen angeordneten Werkzeuge, mit einer, einen Messbereich aufweisenden und/oder ausbildenden, Messanordnung zu einer berührungslosen Vermessung von in dem Messbereich positionierten Werkzeugen oder Werkzeugaufnahmen oder von in dem Messbereich positionierten Teilen von Werkzeugen oder Werkzeugaufnahmen, und mit einer Halteeinheit zu einer Halterung einer der mit einem der Werkzeuge bestückten Werkzeugaufnahmen in dem Messbereich, vorgeschlagen worden. Die Messaufgaben dieser Werkzeugeinstell- und Werkzeugmessgeräte werden von Kamerasystemen, insbesondere Durchlichtkamerasystemen und/oder Auflichtkamerasystemen, erfüllt. Auch Stereokamerasysteme zur Erfassung von 3D-Daten sind bekannt. Tiefeninformationen derartiger Stereokamerasysteme sind jedoch mit relativ großen Unsicherheiten im Zentimeterbereich behaftet.

Die Aufgabe der Erfindung besteht insbesondere darin, eine gattungsgemäße Vorrichtung mit vorteilhaften Eigenschaften hinsichtlich einer Werkzeugvermessung und/oder hinsichtlich einer Werkzeugeinstellung / - voreinstellung bereitzustellen. Die Aufgabe wird erfindungsgemäß durch die Merkmale der unabhängigen und nebengeordneten Patentansprüche gelöst, während vorteilhafte Ausgestaltungen und Weiterbildungen der Erfindung den Unteransprüchen entnommen werden können.

### Vorteile der Erfindung

Die Erfindung geht aus von einem Werkzeugeinstell- und Werkzeugmessgerät zu einem Einstellen/Voreinstellen von Werkzeugen in Werkzeugaufnahmen außerhalb einer Werkzeugmaschine und zu einem, vorzugsweise zumindest auf zehn Mikrometer genauen, insbesondere mikrometergenauen, Erfassen von Werkzeugabmessungen der in den Werkzeugaufnahmen angeordneten Werkzeuge, mit einer, einen Messbereich aufweisenden und/oder ausbildenden, Messanordnung zu einer berührungslosen Vermessung von in dem Messbereich positionierten Werkzeugen, Werkzeugaufnahmen oder Werkzeugpaletten oder von in dem Messbereich positionierten Teilen von Werkzeugen, Werkzeugaufnahmen oder Werkzeugpaletten, und mit einer Halteeinheit zumindest zu einer, vorzugsweise aufrechten, Halterung zumindest einer der mit einem der Werkzeuge bestückten Werkzeugaufnahmen oder einer mit Werkzeugen und/oder Werkzeugaufnahmen bestückten Transportpalette in dem Messbereich.

Es wird vorgeschlagen, dass die Messanordnung zumindest einen 3D-Time-of-Flight (ToF)-Sensor zu einer Durchführung der berührungslosen dreidimensionalen Vermessung aufweist, wobei der 3D-ToF-Sensor dazu vorgesehen ist, Messsignale in Form elektromagnetischer Wellen auszusenden, und vorzugsweise zumindest in den Messbereich einzustrahlen, wobei der 3D-ToF-Sensor dazu vorgesehen ist, Reflexionssignale der Messsignale, die vorzugsweise von in dem Messbereich angeordneten Werkzeugen oder Werkzeugaufnahmen oder von durch das Messsignal außerhalb des Messbereichs bestrahlten Objekten erzeugt werden, zu empfangen, und wobei eine interne Recheneinheit des Werkzeugeinstell- und Werkzeugmessgeräts oder eine mit dem Werkzeugeinstell- und Werkzeugmessgerät datenübertragungstechnisch verbundene externe Recheneinheit dazu vorgesehen ist, zumindest die Reflexionssignale zur Ermittlung von 3D-Daten, insbesondere der zumindest teilweise in dem Messbereich positionierten Werkzeuge oder Werkzeugaufnahmen oder der außerhalb des Messbereichs bestrahlten Objekte, auszuwerten.

Vorteilhaft können besonders präzise 3D-Informationen über Werkzeuge und/oder Werkzeugaufnahmen und über räumliche Anordnungen von Werkzeugen und/oder Werkzeugaufnahmen, z.B. innerhalb von Transportpaletten oder dergleichen erhalten werden. Vorteilhaft liegen die Genauigkeiten der 3D-Daten, insbesondere der Tiefendaten, von 3D-ToF-Sensoren im Millimeterbereich oder darunter. Dadurch kann vorteilhaft eine Betriebssicherheit des Werkzeugeinstell- und Werkzeugmessgeräts erhöht und/oder ein reibungsloserer Betrieb des Werkzeugeinstell- und Werkzeugmessgeräts erreicht werden. Beispielsweise kann vorteilhaft überprüft werden, ob eine Bestückung einer, z.B. von einer Werkzeugmaschine oder von einem Lager, angelieferten mit Werkzeugen und/oder Werkzeugaufnahmen bestückten Transportpalette und damit deren dreidimensionale Gesamtform mit den mitgelieferten Informationen, die z.B. aus einem RFID-Chip der Transportpalette oder über eine Identifizierung der Transportpalette ermittelt wurde, übereinstimmt oder auch tatsächlich so bestückt ist, wie erwartet / es üblich ist in einem Prozessablauf. Dies ist insbesondere deshalb relevant, weil die Transportpaletten auf dem Transportweg in der Regel nicht vor nachträglichen Manipulationen (z.B. durch ein manuelles Hinzufügen, Entnehmen oder Umsortieren während des Transports) geschützt sind und/oder Werkzeuge und/oder Werkzeugaufnahmen während des Transports verrutschen, verkippen oder verloren gehen können. Durch die Überprüfung der erwarteten dreidimensionalen Gesamtform der bestückten Transportpalette können Kollisionen von automatisiert bewegbaren Komponenten des Werkzeugeinstell- und Werkzeugmessgeräts, wie z.B. von Messeinrichtungen des Werkzeugeinstell- und Werkzeugmessgeräts und/oder von Robotergreifern / Handhabungsrobotern des Werkzeugeinstell- und Werkzeugmessgeräts, mit der Transportpalette oder den darin gelagerten Objekten vermieden werden. Zudem kann durch die zuverlässige Ausschließbarkeit von Kollisionen vorteilhaft auch ein Prozessablauf deutlich beschleunigt werden. Vorteilhaft erlauben die hohen Genauigkeiten der Tiefeninformationen (erstmals) des 3D-ToF-Sensors eine zuverlässige und betriebssichere Automatisierung der Vermessung und/oder Einstellung/Voreinstellung von kleinen Werkzeugen, welche insbesondere auf kleinen Transportpaletten mit kleinen Abständen zwischen Halteplätzen (wenige Zentimeter) angeordnet sind.

Außerdem kann durch die hohen Genauigkeiten, insbesondere der Tiefenmessung, des 3D-ToF-Sensors eine Unterscheidung von ähnlich / identisch geformten, jedoch unterschiedlich dimensionierten, Werkzeugen und/oder Werkzeugaufnahmen deutlich vereinfacht und/oder zuverlässiger gemacht werden. Es ist denkbar, dass dadurch vorteilhaft eine freie Bestückbarkeit von Transportpaletten, insbesondere ohne feste Bestückungsvorgaben, ermöglicht werden kann. Dadurch wird eine Bedienbarkeit und/oder eine Bedienerfreundlichkeit der Werkzeugeinstell- und Werkzeugmessgeräte deutlich verbessert. Vorteilhaft sind 3D-ToF-Sensoren zudem robuster gegenüber Partikeln in der Luft oder auf einer Linse als Kamerasysteme. Einflüsse von Partikeln lassen sich vorteilhaft einfacher bei einer Datenverarbeitung ausschließen. Vorteilhaft sind 3D-ToF-Sensoren unabhängiger von Perspektiven, Beleuchtungssituationen und/oder Reflexionen als Kamerasysteme. Vorteilhaft sind 3D-ToF-Sensoren deutlich schneller bei Echtzeiterfassungen als Kamerasysteme, deren Bilder aufwändig ausgewertet werden müssen, z.B. mittels Kl.

Ein Werkzeugeinstell- und Werkzeugmessgerät ist insbesondere ein Präzisionsgerät zu einer Bestimmung von Werkzeugabmessungen von Werkzeugen und/oder Werkzeugaufnahmen, wie beispielsweise Länge, Durchmesser, Rundlauf oder Schneidenposition, vorzugsweise bevor das Werkzeug in eine Werkzeugmaschine eingespannt wird. Zudem kann das Werkzeugeinstell- und Werkzeugmessgerät zu einer Einstellung und/oder Voreinstellung der Werkzeuge, insbesondere der Position der Werkzeuge in Werkzeugaufnahmen vorgesehen sein. Insbesondere ist das Werkzeugeinstell- und Werkzeugmessgerät zumindest zu einer Einstellung einer Länge des Werkzeugs in der Werkzeugaufnahme / einer Einstecktiefe eines Werkzeugschafts des Werkzeugs in der Werkzeugaufnahme vorgesehen. Die von dem Werkzeugeinstell- und Werkzeugmessgerät erfassten Daten können direkt an Werkzeugmaschinen, z.B. CNC-Maschinen, oder Werkzeugverwaltungssysteme übermittelt werden. Zusätzlich kann das Werkzeugeinstell- und Werkzeugmessgerät zu einer Werkzeugprüfung verwendet werden, etwa zur Erkennung von Werkzeugverschleiß oder Beschädigungen. Das Werkzeugeinstell- und Werkzeugmessgerät kann einen Handhabungsroboter zu einer Bestückung eines Messbereichs einer Messanordnung des Werkzeugeinstell- und Werkzeugmessgeräts mit Werkzeugen und/oder Werkzeugaufnahmen aufweisen. Alternativ kann das Werkzeugeinstell- und Werkzeugmessgerät jedoch auch frei von einem Handhabungsroboter ausgebildet sein und manuell oder von einem externen Bestückungsgerät bestückt werden. Die Messanordnung kann neben dem 3D-TOF-Sensor weitere Messinstrumente, z.B. Kameras (Durchlicht und/oder Auflicht), ID-Leser, Beleuchtungseinrichtungen, etc. aufweisen. Es ist denkbar, dass gesamte bestückte Transportpaletten in den Messbereich verbracht werden oder dass die Werkzeuge und/oder Werkzeugaufnahmen einzeln aus den Transportpaletten in den Messbereich und zurück bewegt werden. Die Halteeinheit kann dabei zur Halterung der gesamten Transportpaletten und/oder zur Halterung einzelner Werkzeuge und/oder Werkzeugaufnahmen vorgesehen sein. Vorzugsweise ist der 3D-ToF-Sensor zur Erfassung ganzer Transportpaletten inklusiver deren Bestückung in dem Messbereich vorgesehen. Es ist auch denkbar, dass der 3D-ToF-Sensor zusätzlich zu einer Vermessung von Transportpaletten inklusive deren Bestückung vorgesehen ist, welche außerhalb des Messbereichs, z.B. in einem Vorhaltebereich des Werkzeugeinstell- und Werkzeugmessgeräts, angeordnet sind. Unter "vorgesehen" soll insbesondere speziell programmiert, ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

Eine berührungslose Vermessung ist insbesondere ein Messverfahren, bei dem ein Objekt oder eine Oberfläche erfasst wird, ohne dass ein direkter physischer Kontakt zwischen dem Messsystem und dem Objekt besteht. Der 3D-ToF-Sensor ist vorzugsweise zu einer dreidimensionalen Erfassung von Objekten (zumindest der Transportpaletten, Werkzeuge und Werkzeugaufnahmen) auf der Basis von Laufzeitmessungen (Time-of-Flight) vorgesehen. Dabei wird insbesondere ein Signal, in Form von elektromagnetischen Wellen, z.B. Licht, Laserstrahlen, Funkwellen oder Infrarotimpulse, von dem 3D-ToF-Sensor ausgesendet, von einer Objektoberfläche des Objekts reflektiert und danach von dem 3D-ToF-Sensor wieder empfangen. Durch eine Auswertung einer gemessenen Laufzeit des Signals kann dann eine Entfernung zu jedem reflektierenden Punkt im Sichtfeld berechnet werden. Der 3D-ToF-Sensor kann als ein LiDAR-System (verwendet u.a. gepulstes oder phasenmoduliertes Laserlicht), als eine ToF-Kamera (verwendet moduliertes Infrarotlicht) oder als ein UWB-Radarsensor (verwendet hochfrequente Funkimpulse im Ultra-Wideband-Bereich) ausgebildet sein.

Wenn der 3D-ToF-Sensor als ein LiDAR-Sensor, insbesondere als ein 3D-LiDAR-Sensor, dessen Messstrahlen über zu messende Oberflächen gescannt werden können, oder als ein 2D-LiDAR-Sensor mit statischen Messstrahlen, die z.B. durch eine Bewegung des 2D-LiDAR-Sensors selbst über die zu messende Oberfläche des zu messenden Objekts bewegt werden, ausgebildet ist, kann vorteilhaft eine besonders hohe Präzision der 3D-Daten erreicht werden. Zudem ist LiDAR vorteilhaft eine bewährte und vergleichsweise kostengünstige 3D-Erfassungsmethode. Mit einem LiDAR-Sensor kann vorteilhaft eine hohe Robustheit gegenüber Schmutz oder Staub erreicht werden, insbesondere da bei Erfassung eines LiDAR-Signals die Signalanteile von Schmutz oder Staub auf Optiken oder in der Atmosphäre üblicherweise einfach von den Signalanteilen der zu erfassenden 3D-Daten unterscheidbar sind. Bspw. weisen Signalanteile von Optiken des LiDAR-Sensors üblicherweise eine sehr kurze Laufzeit auf. Bspw. weisen Signalanteile von Schmutz oder Staub in der Atmosphäre auf Grund ihrer zufälligen Bewegungen eine unerwartete Laufzeit auf bzw. weisen keine Korrelation mit benachbarten Messpunkten auf.

Wenn der 3D-ToF-Sensor alternativ als ein Ultrabreitband (UWB)-Radar-Sensor ausgebildet ist, kann vorteilhaft eine hohe Robustheit gegenüber Schmutz oder Staub erreicht werden, insbesondere da die UWB-Signale Schmutzschichten einfach durchdringen können. Insbesondere kann eine gute Eignung für rauere Industrieumgebungen erreicht werden. Außerdem kann vorteilhaft eine hohe Unempfindlichkeit gegenüber äußeren Störungen erreicht werden. Vorteilhaft hat ein UWB-Radar-Sensor keine Probleme mit spiegelnden Oberflächen. Des Weiteren kann der UWB-Radar-Sensor bereits in sehr kleinen Sensorabständen (wenige Zentimeter) zuverlässige und präzise Messungen vornehmen. Dadurch kann vorteilhaft eine kompaktere Ausgestaltung der Messanordnung und/oder des gesamten Werkzeugeinstell- und Werkzeugmessgeräts erreicht werden.

Wenn der 3D-ToF-Sensor alternativ als eine ToF-Kamera, insbesondere als eine Time-of-Flight-Kamera mit Infrarotlicht, ausgebildet ist, kann vorteilhaft eine kompakte, kosteneffiziente und/oder besonders sichere, insbesondere besonders augensichere, Ausgestaltung erreicht werden.

Ferner wird vorgeschlagen, dass die Messanordnung zusätzlich zu dem 3D-ToF-Sensor einen weiteren 3D-ToF-Sensor aufweist, der als LiDAR-Sensor, UWB-Radar-Sensor oder ToF-Kamera ausgebildet ist. Dadurch kann vorteilhaft eine Präzision der erfassten 3D-Daten erhöht werden. Vorteilhaft kann ein größerer Bereich eines Objekts oder einer Gruppe von Objekten dreidimensional erfasst werden. Vorteilhaft können Verschattungen / blinde Flecken vermieden oder zumindest reduziert werden. Dadurch kann vorteilhaft ein Inhalt einer Transportpalette besonders vollständig erfasst werden. Vorzugsweise ist der weitere 3D-ToF-Sensor von demselben Sensortyp wie der 3D-ToF-Sensor. Alternativ ist jedoch auch denkbar, dass der weitere 3D-ToF-Sensor ein anderer Sensortyp ist wie der 3D-ToF-Sensor.

Wenn dabei der weitere 3D-ToF-Sensor derart angeordnet ist, dass er aus einem wesentlich anderen Blickwinkel, insbesondere auf den Messbereich, ausgerichtet ist als der 3D-ToF-Sensor, kann vorteilhaft ein vollständigeres 3D-Abbild der erfassten Objekte erhalten werden. Vorteilhaft können Verschattungen von mehreren in einer Transportpalette angeordneten Objekten zueinander vermieden oder zumindest reduziert werden. Insbesondere liegen zentrale Blickachsen der beiden 3D-ToF-Sensoren in einem Winkel von wenigstens 5° und höchstens 175°, vorzugsweise wenigstens 15° und höchstens 155°, bevorzugt wenigstens 15° und um höchstens 90° und besonders bevorzugt wenigstens 30° und höchstens 60° zueinander. Es ist denkbar, dass der oder die 3D-ToF-Sensoren statisch positioniert sind. Alternativ ist denkbar, dass der oder die 3D-ToF-Sensoren bewegbar gelagert sind, vorzugsweise automatisiert verfahrbar und/oder verschwenkbar sind. Beispielsweise könnten der oder die 3D-ToF-Sensoren (u.a. z.B. ein 2D-LiDAR-Sensor) an dem Handhabungsroboter des Werkzeugeinstell- und Werkzeugmessgeräts angeordnet sein und über Bewegungen des Roboterarms räumlich verlagerbar sein. Beispielsweise könnten der oder die 3D-ToF-Sensoren (u.a. z.B. der 2D-LiDAR-Sensor) an einem translatierbaren und/oder verschwenkbaren Optikträger der Messanordnung des Werkzeugeinstell- und Werkzeugmessgeräts angeordnet sein. Beispielsweise könnten der oder die 3D-ToF-Sensoren über eine eigens dazu vorgesehene Verfahr- und/oder Verschwenkeinrichtung des Werkzeugeinstell- und Werkzeugmessgeräts räumlich verlagerbar sein. Wenn der 3D-ToF-Sensor verschwenk- und/oder verfahrbar gelagert ist, könnte auch auf den weiteren 3D-ToF-Sensor verzichtet werden, da dann auch über die Verschwenkung und/oder das Verfahren unterschiedliche Perspektiven eingestellt werden könnten. Es ist zudem denkbar, dass die Messanordnung noch weitere zusätzliche 3D-ToF-Sensoren, die aus weiteren anderen Blickwinkeln ausgerichtet sind, aufweist.

Zudem wird vorgeschlagen, dass die Messanordnung zumindest eine Scaneinrichtung umfasst, welche dazu vorgesehen ist, zumindest eines der Messsignale ausbildende Messstrahlen, insbesondere Laserstrahlen, des (3D-) LiDAR-Sensors, insbesondere zumindest über einen Teil des Messbereichs, vorzugsweise über die Transportpalette und deren Inhalt, zu scannen. Dadurch kann vorteilhaft ein von dem 3D-ToF-Sensor erfassbarer Bereich maximiert werden. Insbesondere ist die Scaneinrichtung dazu vorgesehen, die Messstrahlen in einer oder in zwei Dimensionen zu scannen. Die Scaneinrichtung könnte beispielsweise durch einen (MEMS-)Mikroscanner ausgebildet sein. Alternativ kann der LiDAR-Sensor auch als kostengünstiger 2D-LiDAR-Sensor ausgebildet sein, welcher ohne Scaneinrichtung oder dergleichen ausgebildet ist. Dieser 2D-LiDAR-Sensor könnte dann mittels externer Systeme, z.B. mittels eines Roboterarms relativ zu dem zu messenden Objekt bewegt werden, um räumliche Daten gewinnen zu können.

Des Weiteren wird vorgeschlagen, dass die Messanordnung zusätzlich zumindest eine Durchlichtkamera aufweist. Dadurch kann vorteilhaft eine Genauigkeit weiter erhöht werden. Insbesondere könnte die Durchlichtkamera eine sehr präzise Kantenerfassung in einer Ebene vornehmen, welche dann durch die Daten des 3D-ToF-Sensors in den 3D-Raum überführt wird. Insbesondere werden Messdaten der Durchlichtkamera und des 3D-ToF-Sensors in der Recheneinheit zeitsynchronisiert. Vorteilhaft lassen sich durch die Kombination Hüllkonturen, die mittels der Durchlichtkamera ermittelt wurden, mit dreidimensionalen Verläufen zwischen den Konturlinien auffüllen. Durch die Kombination der beiden Messprinzipien kann das Werkzeugeinstell- und Werkzeugmessgerät vorteilhaft sowohl 3D-Formen grob erfassen als auch feine Details präzise analysieren, z. B. Schneidkanten oder Mikrogeometrien. Zudem erzeugt die Kombination der beiden Messprinzipien vorteilhaft eine reichere Datengrundlage, welche den Einsatz von KI oder Algorithmen zur Mustererkennung unterstützen bzw. effizienter machen kann. Es ist denkbar, dass die Durchlichtkamera und der 3D-ToF-Sensor oder auch die beiden 3D-ToF-Sensoren an einem gemeinsamen Optikträger des Werkzeugeinstell- und Werkzeugmessgeräts angeordnet sind. Beispielsweise könnte der 3D-ToF-Sensor an einem Arm des Optikträgers angeordnet sein, an dem ein Kamerasensor der Durchlichtkamera angeordnet ist, während der weitere 3D-ToF-Sensor an einem weiteren Arm des Optikträgers angeordnet ist, welcher eine Beleuchtungseinheit der Durchlichtkamera trägt.

Alternativ dazu wird vorgeschlagen, dass die Messanordnung frei von einer Durchlichtkamera, vorzugsweise frei von 2D-Kamerasensoren, ausgebildet ist, insbesondere dass eine Durchlichtkamera der Messanordnung durch den 3D-ToF-Sensor ersetzt wurde. Dadurch kann vorteilhaft eine einfache, kompakte und/oder kostengünstige Ausgestaltung erreicht werden.

Ferner wird ein Verfahren, insbesondere ein computerimplementiertes Verfahren, mit dem Werkzeugeinstell- und Werkzeugmessgerät vorgeschlagen, wobei die ermittelten 3D-Daten oder aus den 3D-Daten ermittelte Informationen oder Parameter an einen Benutzer oder an eine Maschine, z.B. eine Werkzeugmaschine, ausgegeben werden. Dadurch kann vorteilhaft eine hohe Benutzerfreundlichkeit erreicht werden. Vorteilhaft kann eine hohe Präzision folgender, die 3D-Daten verwendenden Bearbeitungsschritte erreicht werden.

Außerdem wird vorgeschlagen, dass in zumindest einem Verfahrensschritt, vorzugsweise mittels der Recheneinheit, anhand der ermittelten 3D-Daten Werkzeugtypen, Werkzeuggattungen und/oder Werkzeuggrößenklassen von durch die Messsignale bestrahlten Werkzeugen, z.B. durch einen Abgleich mit einer Referenzdatenbank, ermittelt werden. Dadurch kann vorteilhaft eine hohe Betriebssicherheit erreicht werden. Vorteilhaft kann eine Fehlbestückung von Werkzeugmaschinen oder eine Kollision von Handhabungsgeräten mit den vermessenen Objekten vermieden werden.

Das Weiteren wird vorgeschlagen, dass in zumindest einem Verfahrensschritt, insbesondere mittels der Recheneinheit, anhand der ermittelten 3D-Daten ein Verschleiß von zumindest einem durch die Messsignale bestrahlten Werkzeug ermittelt wird, beispielsweise durch einen Abgleich der 3D-Daten mit Referenzdaten eines neuwertigen Soll-Werkzeugs und einer Analyse der Abweichungen. Dadurch kann vorteilhaft eine Bearbeitungsqualität optimiert werden, insbesondere indem verschlissene Werkzeuge rechtzeitig aussortiert werden können oder indem ein Verschleiß eines Werkzeugs bei einer Werkstückbearbeitung durch das Werkzeug berücksichtigt werden kann.

Weiterhin wird vorgeschlagen, dass in zumindest einem Verfahrensschritt, insbesondere mittels der Recheneinheit, anhand der ermittelten 3D-Daten mit Werkzeugen bestückte Werkzeugpaletten und/oder unbestückte Werkzeugpaletten erkannt, vorzugsweise unterschieden, werden und/oder dass in zumindest einem Verfahrensschritt, insbesondere mittels der Recheneinheit, anhand der ermittelten 3D-Daten belegte und unbelegte Palettenplätze von Werkzeugpaletten erkannt werden. Dadurch kann vorteilhaft eine Effizienz verbessert werden. Beispielsweise kann der Robotergreifer des Werkzeugeinstell- und Werkzeugmessgeräts schneller und mit geringeren Umwegen verfahren werden, da Kollisionen zuverlässig ausgeschlossen werden können. Eine Werkzeugpalette ist insbesondere eine Art von Transportpalette.

Wenn außerdem in zumindest einem Verfahrensschritt, insbesondere mittels der Recheneinheit, anhand der ermittelten 3D-Daten eine Belegungsart zumindest eines der belegten Palettenplätze der Werkzeugpaletten, vorzugsweise aller belegten Palettenplätze der Werkzeugpaletten, erkannt wird, und wenn vorzugsweise in zumindest einem weiteren Verfahrensschritt die erkannte Belegungsart mit einer vorgesehenen Belegungsart abgeglichen wird, wobei vorzugsweise bei einer Erkennung einer Nicht-Übereinstimmung von erkannter Belegungsart und vorgesehener Belegungsart eine entsprechende Information an den Benutzer oder an die Maschine ausgegeben wird, kann vorteilhaft eine hohe Betriebssicherheit erreicht werden. Vorteilhaft können Fehlbelegungen erkannt werden. Vorteilhaft kann eine Plausibilität eines vorhandenen Belegungsplans geprüft werden. Insbesondere werden in dem Verfahrensschritt die Werkzeuge und/oder Werkzeugaufnahmen anhand der 3D-Daten identifiziert und mit den laut Belegungsplan an den jeweiligen Palettenplätzen vorgesehenen Werkzeugen und/oder Werkzeugaufnahmen abgeglichen. Die Erkennung der Belegungsart umfasst insbesondere die Erkennung eines Werkzeugtyps oder einer Werkzeuggattung des den Palettenplatz belegenden Werkzeugs.

Wenn weiterhin in zumindest einem Verfahrensschritt anhand der ermittelten 3D-Daten eine Rotations-Ausrichtung von Objekten, insbesondere von Werkzeugaufnahmen, in den belegten Palettenplätzen der Werkzeugpaletten erkannt wird und wenn vorzugsweise in zumindest einem weiteren Verfahrensschritt die erkannte Rotations-Ausrichtung mit einer vorgesehenen Rotations-Ausrichtung abgeglichen wird, wobei vorzugsweise bei einer Erkennung einer Nicht-Übereinstimmung von erkannter Rotations-Ausrichtung und vorgesehener Rotations-Ausrichtung eine entsprechende Information an den Benutzer oder an die Maschine ausgegeben wird, kann vorteilhaft eine hohe Betriebssicherheit erreicht werden. Vorteilhaft können fehlerhaft positionierte oder nicht optimal sitzende Objekte, insbesondere Werkzeugaufnahmen, in den Paletten erkannt werden. Insbesondere bei Werkzeugpaletten, welche eine Vorzugsrotationsposition für die aufgenommenen Objekte, insbesondere Werkzeugaufnahmen, festlegen, z.B. durch einen Nuteingriff, kann vorteilhaft sichergestellt werden, dass die Objekte in der Vorzugsrotationsposition in die Werkzeugpalette eingelagert sind. Nicht optimal, also nicht in der Vorzugsrotationsposition sitzende Werkzeugaufnahmen können im schlechtesten Fall verkippt oder nicht vollständig versenkt in einem jeweiligen Halteplatz sitzen, so dass sie vom Handhabungsroboter fehlerhaft gegriffen werden könnten. Derartige Fehlbedienungen können durch die Erkennung der Rotations-Ausrichtung vorteilhaft vermieden werden. Zur Ermittlung der Rotations-Ausrichtung der Objekte, insbesondere Werkzeugaufnahmen, wird zunächst nach zumindest einem, vorzugsweise genau einem, charakteristischen Geometrie- und/oder Oberflächenmerkmal des Objekts gesucht, welches am Umfang des Objekts an (lediglich) einer bekannten Stelle angeordnet ist und/oder welches die ansonsten hohe Rotationssymmetrie der Oberfläche von Objekten wie Werkzeugaufnehmen durchbrechen. Wenn das charakteristische Geometrie- und/oder Oberflächenmerkmal erkannt wurde, wird dessen Form, dessen Orientierung und/oder dessen Lage auf dem Objekt mit einer bekannten vorgesehenen / optimalen Form, Orientierung und/oder Lage abgeglichen. Wenn eine signifikante Abweichung vorliegt, die auf eine relevante Abweichung der Rotations-Ausrichtung hindeutet, wird eine entsprechende Warnung an den Benutzer oder die Maschine, z.B. den Handhabungs-Roboter ausgegeben, so dass eine Korrektur der Rotations-Ausrichtung des Objekts oder Korrektur des Greifvorgangs durch den Handhabungs-Roboter automatisiert oder manuell vorgenommen werden kann, oder dass ein Greifvorgang des HandhabungsRoboters gestoppt werden kann, bis die Situation bereinigt ist. Ein beispielhaftes charakteristisches Geometrie- und/oder Oberflächenmerkmal könnte ein an der Oberfläche des Objekts sichtbar angebrachter ID-Chip (z.B. ein ZOLLER zidCode ID-Plättchen oder ein RFID-Chip) oder eine Vertiefung / Ausnehmung zu einem sichtbaren Anordnen derartiger ID-Chips an einem Objekt, z.B. einem Werkzeugfutter sein. Alternative charakteristische Geometrie- und/oder Oberflächenmerkmale sind jedoch ebenfalls denkbar. Die Erkennung der Rotations-Ausrichtung könnte alternativ zu dem 3D-ToF-Sensor auch mit einem einfachen Standard-Kamerasystem erfolgen.

Die Ermittlung der Werkzeugtypen, der Werkzeuggattungen, der Werkzeuggrößenklassen und/oder des Verschleißes der Werkzeuge und/oder die Erkennung der Werkzeugpaletten, der Belegung der Palettenplätze und/oder der Belegungsart der Palettenplätze könnte mittels klassischer untrainierter Algorithmen geschehen, unter anderem z.B. ein Template Matching mit Iterative Closest Point bei der Ermittlung des Werkzeugtyps, eine Merkmalsextraktion und ein Entscheidungsbaum bei der Ermittlung der Werkzeuggattung, eine Bounding Box Analyse bei der Ermittlung der Werkzeuggrößenklassen, ein Soll-Ist-Vergleich mittels Oberflächendifferenz bei der Ermittlung des Verschleißes, ein geometrisches Matching bei der Erkennung der Werkzeugpaletten, eine zellenweise Höhenanalyse bei der Erkennung der Belegung von Palettenplätzen oder einem Volumen- und Formvergleich bei der Erkennung der Belegungsart. Vorzugsweise wird die Ermittlung der Werkzeugtypen, der Werkzeuggattungen, der Werkzeuggrößenklassen und/oder des Verschleißes der Werkzeuge und/oder die Erkennung der Werkzeugpaletten, der Belegung der Palettenplätze, der Belegungsart der Palettenplätze und/oder der Rotations-Ausrichtung in den Palettenplätzen jedoch von jeweils zumindest einem speziell auf die jeweilige Aufgabe trainierten Algorithmus maschinellen Lernens unterstützt oder durchgeführt. Dadurch kann vorteilhaft eine hohe Präzision und/oder Zuverlässigkeit der jeweiligen Merkmalsermittlung erreicht werden. Folgende Algorithmen maschinellen Lernens kämen jeweils in Frage, wobei jedoch nicht ausgeschlossen ist, dass eine Fachperson andere oder weitere Algorithmen maschinellen Lernens in Betracht ziehen würde.

Ermittlung der Werkzeugtypen: Convolutional Neural Network (CNN), trainiert mit 3D-Scans oder Tiefenbildern bekannter Werkzeugtypen, jeweils mit Labeln wie Bohrer, Fräser oder Reibahle oder K-Nearest Neighbors (k-NN), trainiert mit Tiefenbildern oder Punktwolken mit Werkzeuglabels.

Ermittlung der Werkzeuggattungen: Random Forest Classifier, trainiert mit extrahierten Merkmalen aus 3D-Daten wie Längen-Durchmesser-Verhältnis oder Schneidenanzahl und zugehöriger Gattung wie Schaftwerkzeug oder Aufnahmewerkzeug oder Naive Bayes, trainiert mit abgeleiteten Merkmalen wie Schneidenwinkel, Querschnittsform und Längensignatur mit Gattungszuordnung.

Ermittlung der Werkzeuggrößenklassen: Support Vector Machine (SVM), trainiert mit Geometrieparametern wie Länge und Durchmesser und bekannten Größenklassen, beispielsweise kleiner 10 mm, 10 bis 20 mm oder größer 20 mm oder Logistic Regression, trainiert mit Durchmessern, Längen, Kantenanzahlen, gestuft nach definierten Größenklassen.

Ermittlung des Werkzeugverschleißes: Regressionsnetzwerk, zum Beispiel ein Deep Neural Network (DNN), trainiert mit historischen Werkzeugdaten, bestehend aus 3D-Modellen vor und nach der Nutzung sowie den zugehörigen Verschleißwerten, etwa Schneidenverkürzung in Millimetern oder Gradient Boosting Regression (z. B. XGBoost), trainiert mit Differenzdaten zwischen Soll- und Ist-Geometrie sowie historischen Verschleißwerten.

Erkennung der Werkzeugpaletten: CNN oder ein Echtzeit-Objekterkennungsnetz wie YOLO, trainiert mit Bild- oder Tiefendaten verschiedener Palettentypen, die entsprechend annotiert sind, oder Hough-Transform und Klassifikator, trainiert mit Bildern von Paletten in verschiedenen Positionen und Zuständen, annotiert nach Typen.

Erkennung der Belegung der Palettenplätze: Semantic Segmentation Network, zum Beispiel U-Net, trainiert mit annotierten Tiefenbildern, die belegte und unbelegte Rasterfelder enthalten oder Thresholding mit Connected Component Labeling, trainiert mit Tiefenbildern oder Höhenkarten, mit belegten und freien Feldern.

Erkennung der Belegungsart der Palettenplätze: Decision Tree oder ein Ensemble-Learning-Modell, trainiert mit Formmerkmalen und geometrischen Daten pro Palettenplatz, die nach Belegungsart gelabelt sind, etwa Werkzeugaufnahme oder Einzelwerkzeug oder Rule-based Klassifikation mit Schwellenwertlogik, trainiert mit Volumen, Formparameter, Lagemerkmale, gelabelt nach Belegungsart.

Zudem ist denkbar, dass anhand der ermittelten 3D-Daten ein zweidimensionales Falschfarbenbild erstellt wird und Bereichen ähnlicher Abstände in dem zweidimensionalen Falschfarbenbild Konturen zugeordnet wird. Derartige Falschfarbenbilder von bekannten Werkzeugen, Werkzeugaufnahmen oder Transportpaletten (unbelegt, teilbelegt, vollbelegt) könnten dann zu einem Training des Algorithmus maschinellen Lernens, insbesondere eines CNN-Algorithmus, verwendet werden. Der derart trainierte CNN-Algorithmus könnte dann zur Auswertung der 3D-Daten des 3D-ToF-Sensors eingesetzt werden, um daraus die Werkzeuggattungen, die Werkzeuggrößenklassen, die Verschleiße, die Werkzeugpaletten, die Belegungen der Palettenplätze und/oder die Belegungsarten der Palettenplätze zu erkennen.

Ferner wird die Recheneinheit vorgeschlagen, welche in das Werkzeugeinstell- und Werkzeugmessgerät integrierbar ist oder welche mit dem Werkzeugeinstell- und Werkzeugmessgerät verbindbar ist, umfassend zumindest einen Prozessor und zumindest einen Datenspeicher oder eine Datenverbindung zu einem externen Datenspeicher, wobei in dem Datenspeicher ein Betriebsprogramm hinterlegt ist, welches bei einer Ausführung durch den Prozessor dazu vorgesehen ist, das vorbeschriebene Verfahren durchzuführen. Dadurch können vorteilhaft besonders präzise 3D-Informationen über Werkzeuge und/oder Werkzeugaufnahmen und über räumliche Anordnungen von Werkzeugen und/oder Werkzeugaufnahmen, z.B. innerhalb von Transportpaletten oder dergleichen erhalten werden. Der Datenspeicher, insbesondere das Betriebsprogramm, kann insbesondere einen oder mehrere der vorgenannten Algorithmen, insbesondere der vorgenannten entsprechend trainierten Algorithmen maschinellen Lernens umfassen.

Das erfindungsgemäße Werkzeugeinstell- und Werkzeugmessgerät, das erfindungsgemäße Verfahren und die erfindungsgemäße Recheneinheit sollen hierbei nicht auf die oben beschriebene Anwendung und Ausführungsform beschränkt sein. Insbesondere kann das erfindungsgemäße Werkzeugeinstell- und Werkzeugmessgerät, das erfindungsgemäße Verfahren und die erfindungsgemäße Recheneinheit zu einer Erfüllung einer hierin beschriebenen Funktionsweise eine von einer hierin genannten Anzahl von einzelnen Elementen, Bauteilen und Einheiten abweichende Anzahl aufweisen.

### Zeichnungen

Weitere Vorteile ergeben sich aus der folgenden Zeichnungsbeschreibung. In den Zeichnungen ist ein Ausführungsbeispiel der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine schematische perspektivische Darstellung einer beispielhaften Werkzeugpalette mit einer ein Werkzeug halternden Werkzeugaufnahme,
- Fig. 2: eine schematische perspektivische Darstellung eines beispielhaften Werkzeugeinstell- und Werkzeugmessgeräts,
- Fig. 3: eine schematische Draufsicht auf eine Messanordnung und einen Messbereich des Werkzeugeinstell- und Werkzeugmessgeräts,
- Fig. 4: eine schematische perspektivische Darstellung eines beispielhaften alternativen Werkzeugeinstell- und Werkzeugmessgeräts und
- Fig. 5: ein schematisches Ablaufdiagramm eines Verfahrens mit dem Werkzeugeinstell- und Werkzeugmessgerät.

### Beschreibung des Ausführungsbeispiels

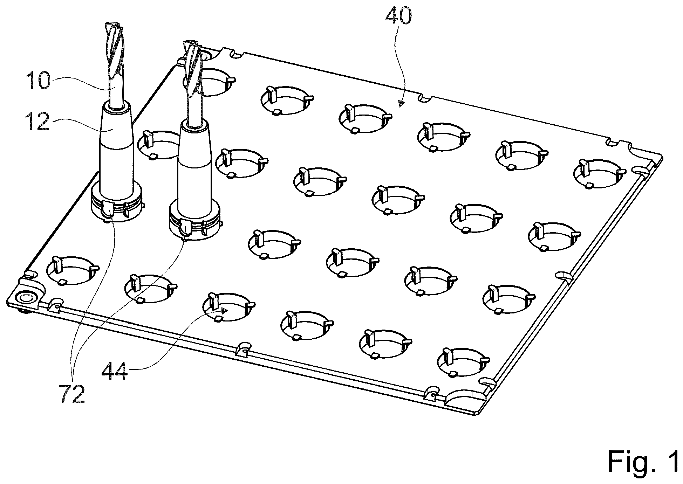

Die Figur 1 zeigt schematisch eine beispielhafte Werkzeugpalette 40. Die Werkzeugpalette 40 ist eine Transportpalette. Die Werkzeugpalette 40 ist zu einer aufrechten Halterung von Werkzeugen 10 und/oder Werkzeugaufnahmen 12 vorgesehen. Die Werkzeugpalette 40 weist eine Mehrzahl an Palettenplätzen 44 auf. Jeder der Palettenplätze 44 ist zu einer Aufnahme eines einzelnen Werkzeugs 10 oder einer einzelnen Werkzeugaufnahme 12, welche mit oder ohne Werkzeug 10 bestückt sein kann, vorgesehen. In dem dargestellten Fall sind zwei Palettenplätze 44 jeweils von einer als HSK-Schrumpfspannfutter ausgebildeten Werkzeugaufnahme 12 belegt, wobei die Werkzeugaufnahmen 12 jeweils mit einem als Schaftbohrer ausgebildeten Werkzeug 10 bestückt sind. Die restlichen Palettenplätze 44 der Werkzeugpalette 40 sind in dem dargestellten Beispiel der Fig. 1 unbelegt. Die Erfindung ist auch auf beliebige andere Arten von Werkzeugpaletten 40, Werkzeugen 10 und Werkzeugaufnahmen 12 anwendbar.

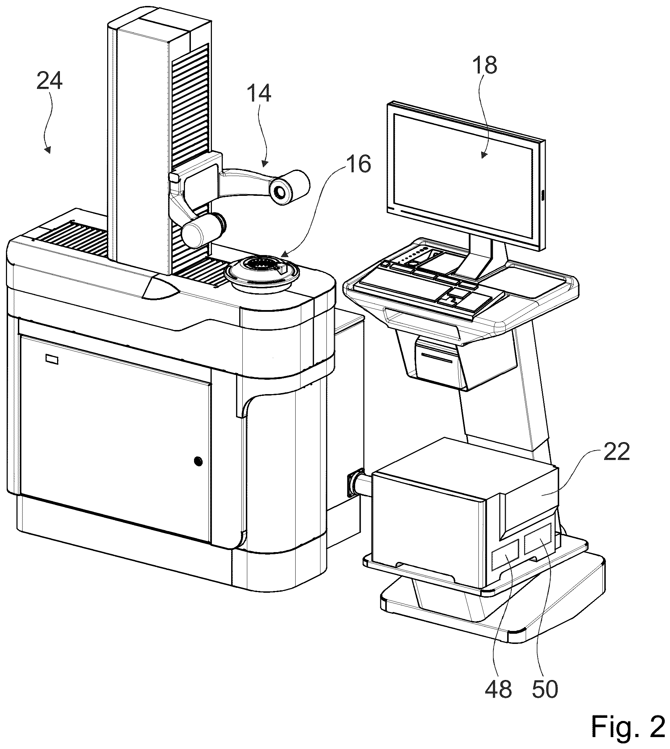

Die Figur 2 zeigt eine schematische Darstellung eines beispielhaften Werkzeugeinstell- und Werkzeugmessgeräts 24. Das Werkzeugeinstell- und Werkzeugmessgerät 24 ist zu einem Einstellen/Voreinstellen der Werkzeuge 10 in den Werkzeugaufnahmen 12 außerhalb einer Werkzeugmaschine vorgesehen. Das Werkzeugeinstell- und Werkzeugmessgerät 24 ist zu einem mikrometergenauen Erfassen von Werkzeugabmessungen der in den Werkzeugaufnahmen 12 angeordneten Werkzeuge 10 vorgesehen. Das Werkzeugeinstell- und Werkzeugmessgerät 24 weist eine Messanordnung 14 auf. Die Messanordnung 14 umfasst einen Messbereich. Der Messbereich kann je nach Art und Ausgestaltung der Messanordnung 14 unterschiedliche Formen und Größen aufweisen. Der Messbereich ist zumindest zu einer Aufnahme von Werkzeugaufnahmen 12 vorgesehen. Vorzugsweise kann auch die gesamte in Fig. 1 dargestellte Werkzeugpalette 40 mit beliebiger Bestückung in den Messbereich verbracht und dort von der Messanordnung 14 vermessen werden. Die Messanordnung 14 ist zu einer berührungslosen Vermessung von in dem Messbereich positionierten Werkzeugen 10, Werkzeugaufnahmen 12 oder Werkzeugpaletten 40 vorgesehen. Das Werkzeugeinstell- und Werkzeugmessgerät 24 weist eine Halteeinheit 16 auf. Die Halteeinheit 16 ist zu einer aufrechten Halterung des Werkzeugs 10, der mit einem der Werkzeuge 10 bestückten Werkzeugaufnahmen 12 oder der mit den Werkzeugen 10 und/oder Werkzeugaufnahmen 12 bestückten Werkzeugpalette 40 in dem Messbereich vorgesehen. Das Werkzeugeinstell- und Werkzeugmessgerät 24 weist eine interne Recheneinheit 22 auf. Alternativ könnte das Werkzeugeinstell- und Werkzeugmessgerät 24 auch lediglich datenübertragungstechnisch mit einer externen Recheneinheit verbunden sein, welche vorzugsweise dieselben Aufgaben erfüllen kann wie die interne Recheneinheit 22. Die Recheneinheit 22 ist dazu vorgesehen, Daten der Messanordnung 14 auszuwerten. Das Werkzeugeinstell- und Werkzeugmessgerät 24 umfasst eine Anzeigeeinheit 18, welche dazu vorgesehen ist, Daten der von der Recheneinheit 22 durchgeführten Auswertungen an einen Bediener auszugeben.

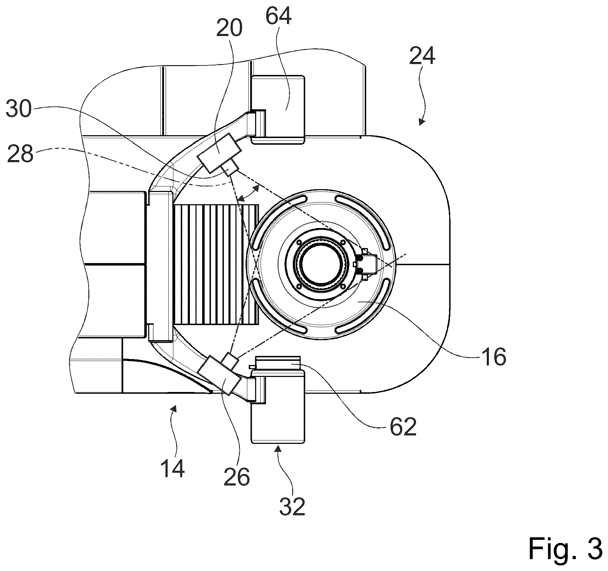

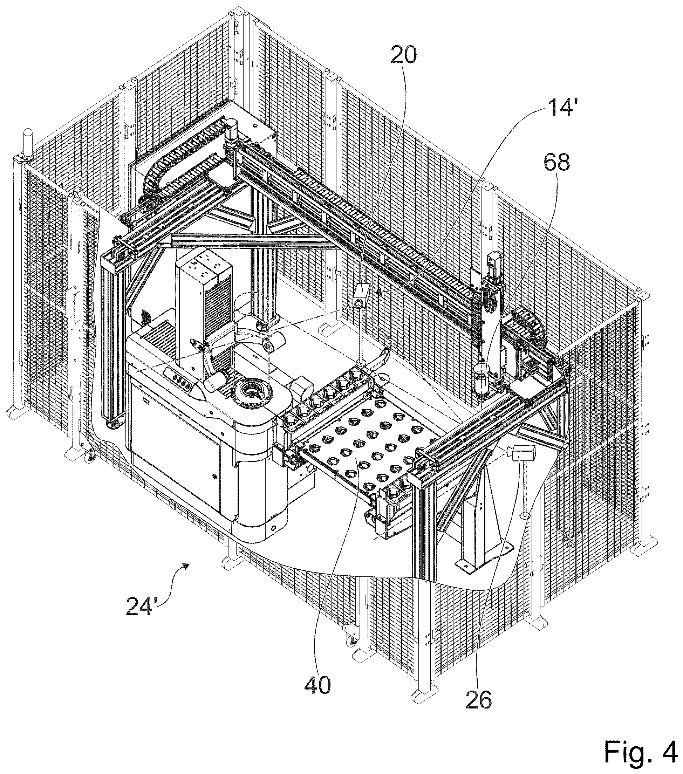

Die Figur 3 zeigt eine schematische Draufsicht auf die Messanordnung 14 und den Messbereich des Werkzeugeinstell- und Werkzeugmessgeräts 24. Die Messanordnung 14 weist einen 3D-Time-of-Flight (ToF)-Sensor 20 auf. Der 3D-ToF-Sensor 20 ist zu einer Durchführung der berührungslosen Vermessung vorgesehen. Der 3D-ToF-Sensor 20 ist zu einer berührungslosen dreidimensionalen Vermessung der in dem Messbereich positionierten Werkzeuge 10, Werkzeugaufnahmen 12 oder Werkzeugpaletten 40 vorgesehen. Dazu ist der 3D-ToF-Sensor 20 dazu vorgesehen, Messsignale in Form elektromagnetischer Wellen auszusenden. Zumindest ein Teil dieser Messsignale wird von dem 3D-ToF-Sensor 20 in den Messbereich eingestrahlt. Der 3D-ToF-Sensor 20 ist zudem dazu vorgesehen, Reflexionssignale der Messsignale, die von bestrahlten Objekten wie den Werkzeugen 10, den Werkzeugaufnahmen 12 oder den Werkzeugpaletten 40 erzeugt / zurückgeworfen werden, zu empfangen. Die Recheneinheit 22 ist dazu vorgesehen, die Reflexionssignale zur Ermittlung von 3D-Daten dieser Werkzeuge 10, Werkzeugaufnahmen 12 oder Werkzeugpaletten 40 auszuwerten. Die Messanordnung 14 weist zusätzlich zu dem 3D-ToF-Sensor 20 einen weiteren 3D-ToF-Sensor 26 auf. Der 3D-ToF-Sensor 20 und der weitere 3D-ToF-Sensor 26 sind derart an dem Werkzeugeinstell- und Werkzeugmessgerät 24 oder an einem (nur in der Figur 4 beispielhaft dargestellten) Robotergreifer 68 des Werkzeugeinstell- und Werkzeugmessgeräts 24 angeordnet, dass sie jeweils wesentlich unterschiedlichen Blickwinkeln auf den Messbereich und/oder auf die zu vermessenden Objekte ausgerichtet sind. Der 3D-ToF-Sensor 20 ist als ein LiDAR-Sensor ausgebildet. Alternativ könnte der 3D-ToF-Sensor 20 auch als ein UWB-Radar-Sensor ausgebildet sein. Alternativ könnte der 3D-ToF-Sensor 20 auch als eine ToF-Kamera ausgebildet sein. Der weitere 3D-ToF-Sensor 26 ist ebenfalls als ein LiDAR-Sensor ausgebildet. Alternativ könnte der weitere 3D-ToF-Sensor 26 auch als ein UWB-Radar-Sensor ausgebildet sein. Alternativ könnte der weitere 3D-ToF-Sensor 26 auch als eine ToF-Kamera ausgebildet sein. Die Messanordnung 14 umfasst zudem eine Scaneinrichtung 30, welche dazu vorgesehen ist, Messstrahlen 28 des LiDAR-Sensors, welche die Messsignale des 3D-ToF-Sensors 20 ausbilden, zu scannen. Alternativ ist die Messanordnung 14 frei von einer Scaneinrichtung 30 ausgebildet und auf ggf. über externe Lagerachsen verfahrbar und/oder verschwenkbar gelagert. Durch das Scannen wird eine Oberfläche von zu vermessenden Objekten abgerastert. Auch Messstrahlen des weiteren 3D-ToF-Sensors 26 können gescannt sein. Die Messanordnung 14 weist zusätzlich zu den 3D-ToF-Sensoren 20, 26 eine Durchlichtkamera 32 auf. Die Durchlichtkamera 32 ist zu einer Durchführung einer weiteren optischen Messung an den von den 3D-ToF-Sensoren 20, 26 vermessenen Objekten, insbesondere innerhalb des Messbereichs, vorgesehen. Die Durchlichtkamera 32 umfasst einen Kamerasensor 62 und eine dem Kamerasensor 62 (relativ zu dem Messbereich) direkt gegenüberliegend angeordnete Beleuchtungseinheit 64. Alternativ könnte die Messanordnung 14 auch frei von einer Durchlichtkamera, und vorzugsweise vollständig frei von 2D-Kamerasensoren, ausgebildet sein.

Die Figur 4 zeigt schematisch und beispielhaft eine zu der Messanordnung 14 der Figur 3 alternative Messanordnung 14' eines alternativen Werkzeugeinstell- und Werkzeugmessgeräts 24'.

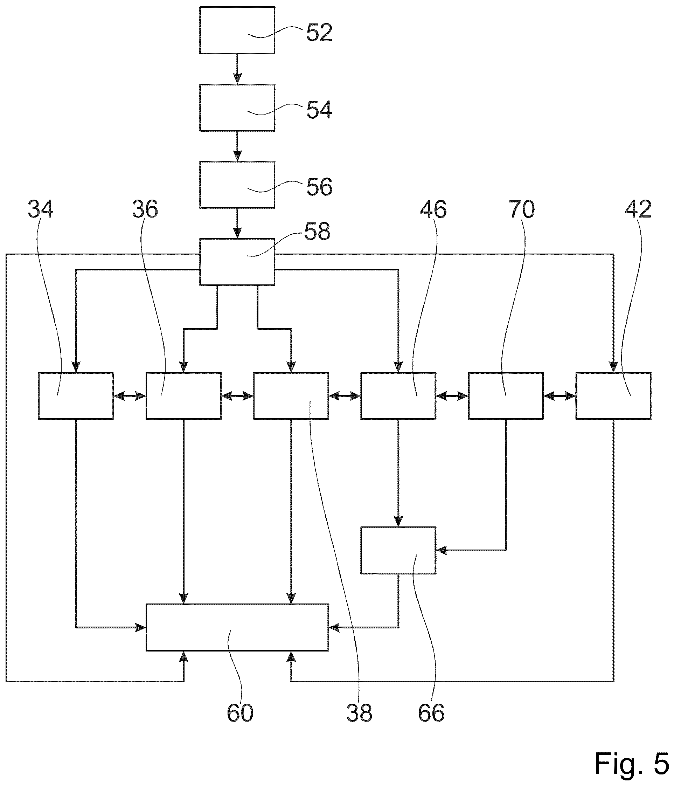

Die Recheneinheit 22 umfasst einen Prozessor 48 und einen Datenspeicher 50 (vgl. Fig. 2) oder eine Datenverbindung zu einem externen Datenspeicher. In dem Datenspeicher 50 ist ein Betriebsprogramm hinterlegt, welches bei einer Ausführung durch den Prozessor 48 dazu vorgesehen ist, ein Verfahren zu einer Ermittlung der 3D-Daten mittels des Werkzeugeinstell- und Werkzeugmessgeräts 24 und zur Ausgabe der ermittelten 3D-Daten oder der aus den 3D-Daten ermittelten Informationen oder Parameter an einen Benutzer oder an eine Maschine durchzuführen. Die Figur 5 zeigt ein schematisches Ablaufdiagramm des Verfahrens. In zumindest einem Verfahrensschritt 52 wird ein Objekt, z.B. eine teilweise mit Werkzeugaufnahmen 12 belegte Werkzeugpalette 40, in den Messbereich der Messanordnung 14 verbracht. In zumindest einem weiteren Verfahrensschritt 54 werden die Messsignale von dem oder den 3D-ToF-Sensoren 20, 26 auf das Objekt eingestrahlt. Im Fall der Ausbildung des 3D-ToF-Sensors 20 als 3D-LiDAR-Sensor werden die Messsignale als Messstrahlen 28 über eine Oberfläche des Objekts, z.B. eines Werkzeugs 10 mit Werkzeugaufnahme 12, welches in einen Palettenplatz 44 einer Werkzeugpalette 40 angeordnet ist, gescannt. Im Fall der Ausbildung des 3D-ToF-Sensors 20 als 2D-LiDAR-Sensor werden die Messstrahlen mittels Bewegungen eines Lagerelements, auf dem der 2D-LiDAR-Sensor montiert ist, z.B. eines Roboterarms, über die Oberfläche des Objekts bewegt. In zumindest einem weiteren Verfahrensschritt 56 werden von dem 3D-ToF-Sensor 20 aus den Messsignalen durch Reflexion an dem Objekt erzeugte Reflexionssignale erfasst. In zumindest einem weiteren Verfahrensschritt 58 werden die Reflexionssignale von der Recheneinheit 22 ausgewertet. Durch die Auswertung werden die 3D-Daten des Objekts, also z.B. der Werkzeugpalette 40 mit dem in der Werkzeugaufnahme 12 angeordneten Werkzeug 10, erzeugt. In zumindest einem weiteren Verfahrensschritt 34 werden anhand der ermittelten 3D-Daten Werkzeugtypen, Werkzeuggattungen und/oder Werkzeuggrößenklassen von durch die Messsignale bestrahlten Werkzeugen 10 ermittelt. In zumindest einem weiteren Verfahrensschritt 36 wird anhand der ermittelten 3D-Daten ein Verschleiß von dem durch die Messsignale bestrahlten Werkzeug 10 ermittelt. In zumindest einem weiteren Verfahrensschritt 38 wird anhand der ermittelten 3D-Daten die mit den Werkzeugen 10 bestückte Werkzeugpalette 40 erkannt. In dem Verfahrensschritt 38 wird zudem anhand der 3D-Daten ermittelt / unterschieden ob die Werkzeugpalette 40 mit Werkzeugen 10 / Werkzeugaufnahmen 12 bestückt ist oder unbestückt ist. In zumindest einem weiteren Verfahrensschritt 42 werden anhand der ermittelten 3D-Daten belegte und unbelegte Palettenplätze 44 der Werkzeugpalette 40 erkannt. In zumindest einem weiteren Verfahrensschritt 46 wird anhand der ermittelten 3D-Daten eine Belegungsart zumindest eines der belegten Palettenplätze 44 der Werkzeugpaletten 40 erkannt. In zumindest einem weiteren Verfahrensschritt 70 wird anhand der ermittelten 3D-Daten eine Rotations-Ausrichtung der in den belegten Palettenplätzen 44 der Werkzeugpalette 40 angeordneten Objekte / Werkzeugaufnahmen 12 anhand einer Erkennung von charakteristischen Geometrie- und/oder Oberflächenmerkmalen 72 des Objekts / der Werkzeugaufnahme 12 erkannt. In den Werkzeugaufnahmen 12 der Figur 1 ist ein beispielhaftes derartiges charakteristisches Geometrie- und/oder Oberflächenmerkmal 72, welches als Aufnahmebereich für einen ID-Chip ausgebildet ist, dargestellt. In der Figur 1 sind beide dargestellten Werkzeugaufnahmen 12 in der vorgesehenen ordnungsgemäßen Rotations-Ausrichtung in die Werkzeugpalette 40 eingelagert. In zumindest einem weiteren Verfahrensschritt 66 wird die erkannte Belegungsart bzw. die erkannte Rotations-Ausrichtung mit einer vorgesehenen Belegungsart bzw. mit einer vorgesehenen Rotations-Ausrichtung abgeglichen. Bei einer Erkennung einer Nicht-Übereinstimmung von erkannter Belegungsart und vorgesehener Belegungsart bzw. von erkannter Rotations-Ausrichtung und vorgesehener Rotations-Ausrichtung kann in einem folgenden Verfahrensschritt 60 eine entsprechende Information an einen Benutzer oder an eine Maschine, z.B. eine Werkzeugmaschine oder an einen Handhabungsroboter, insbesondere zu einer Anpassung einer Trajektorie eines Arms des Handhabungsroboters während eines Bestückungsvorgangs der Werkzeugpalette 40, ausgegeben werden. In dem Verfahrensschritt 60 werden die ermittelten 3D-Daten und/oder die vorgenannten aus den 3D-Daten ermittelten Informationen oder Parameter an den Benutzer oder an die Maschine ausgegeben. Einer oder mehrere der Verfahrensschritte 34, 36, 38, 42, 46 der Ermittlung der Werkzeugtypen, der Werkzeuggattungen, der Werkzeuggrößenklassen und/oder des Verschleißes der Werkzeuge 10 und/oder der Erkennung der Werkzeugpaletten 40, der Erkennung der Belegung der Palettenplätze 44 und/oder der Erkennung der Belegungsart der Palettenplätze 44 wird dabei von jeweils zumindest einem speziell auf die jeweilige Aufgabe trainierten Algorithmus maschinellen Lernens unterstützt oder durchgeführt.

### Bezugszeichen

- 10: Werkzeug
- 12: Werkzeugaufnahme
- 14: Messanordnung
- 16: Halteeinheit
- 18: Anzeigeeinheit
- 20: 3D-ToF-Sensor
- 22: Recheneinheit
- 24: Werkzeugeinstell- und Werkzeugmessgerät
- 26: 3D-ToF-Sensor
- 28: Messstrahl
- 30: Scaneinrichtung
- 32: Durchlichtkamera
- 34: Verfahrensschritt
- 36: Verfahrensschritt
- 38: Verfahrensschritt
- 40: Werkzeugpalette
- 42: Verfahrensschritt
- 44: Palettenplatz
- 46: Verfahrensschritt
- 48: Prozessor
- 50: Datenspeicher
- 52: Verfahrensschritt
- 54: Verfahrensschritt
- 56: Verfahrensschritt
- 58: Verfahrensschritt
- 60: Verfahrensschritt
- 62: Kamerasensor
- 64: Beleuchtungseinheit
- 66: Verfahrensschritt
- 68: Robotergreifer
- 70: Verfahrensschritt
- 72: Geometrie- und/oder Oberflächenmerkmal

## Patentansprüche

1. Werkzeugeinstell- und Werkzeugmessgerät (24) zu einem Einstellen/Voreinstellen von Werkzeugen (10) in Werkzeugaufnahmen (12) außerhalb einer Werkzeugmaschine und zu einem, vorzugsweise zumindest mikrometergenauen, Erfassen von Werkzeugabmessungen der in den Werkzeugaufnahmen (12) angeordneten Werkzeuge (10),
mit einer, einen Messbereich aufweisenden und/oder ausbildenden, Messanordnung (14) zu einer berührungslosen Vermessung von in dem Messbereich positionierten Werkzeugen (10), Werkzeugaufnahmen (12) oder Werkzeugpaletten (40) oder von in dem Messbereich positionierten Teilen von Werkzeugen (10), Werkzeugaufnahmen (12) oder Werkzeugpaletten (40), und
mit einer Halteeinheit (16) zumindest zu einer, vorzugsweise aufrechten, Halterung zumindest einer der mit einem der Werkzeuge (10) bestückten Werkzeugaufnahmen (12) oder einer mit Werkzeugen (10) und/oder Werkzeugaufnahmen (12) bestückten Werkzeugpalette (40) in dem Messbereich,
**dadurch gekennzeichnet, dass** die Messanordnung (14) zumindest einen 3D-Time-of-Flight (ToF)-Sensor (20) zu einer Durchführung einer berührungslosen dreidimensionalen Vermessung aufweist,
wobei der 3D-ToF-Sensor (20) dazu vorgesehen ist, Messsignale in Form elektromagnetischer Wellen auszusenden, und vorzugsweise zumindest in den Messbereich einzustrahlen,
wobei der 3D-ToF-Sensor (20) dazu vorgesehen ist, Reflexionssignale der Messsignale, die vorzugsweise von in dem Messbereich angeordneten Werkzeugen (10) oder Werkzeugaufnahmen (12) oder von durch das Messsignal außerhalb des Messbereichs bestrahlten Objekten erzeugt werden, zu empfangen, und
wobei eine interne Recheneinheit (22) des Werkzeugeinstell- und Werkzeugmessgeräts (24) oder eine mit dem Werkzeugeinstell- und Werkzeugmessgerät (24) datenübertragungstechnisch verbundene externe Recheneinheit dazu vorgesehen ist, zumindest die Reflexionssignale zur Ermittlung von 3D-Daten, insbesondere der zumindest teilweise in dem Messbereich positionierten Werkzeuge (10) oder Werkzeugaufnahmen (12) oder der außerhalb des Messbereichs bestrahlten Objekte, auszuwerten.

2. Werkzeugeinstell- und Werkzeugmessgerät (24) nach Anspruch 1, **dadurch gekennzeichnet, dass** der 3D-ToF-Sensor (20) als ein LiDAR-Sensor ausgebildet ist.

3. Werkzeugeinstell- und Werkzeugmessgerät (24) nach Anspruch 1, **dadurch gekennzeichnet, dass** der 3D-ToF-Sensor (20) als ein Ultrabreitband (UWB)-Radar-Sensor ausgebildet ist.

4. Werkzeugeinstell- und Werkzeugmessgerät (24) nach Anspruch 1, **dadurch gekennzeichnet, dass** der 3D-ToF-Sensor (20) als eine ToF-Kamera ausgebildet ist.

5. Werkzeugeinstell- und Werkzeugmessgerät (24) nach einem der vorhergehenden Ansprüche, **dadurch gekennzeichnet, dass** die Messanordnung (14) zusätzlich zu dem 3D-ToF-Sensor (20) einen weiteren 3D-ToF-Sensor (26) aufweist, der als LiDAR-Sensor, UWB-Radar-Sensor oder ToF-Kamera ausgebildet ist.

6. Werkzeugeinstell- und Werkzeugmessgerät (24) nach Anspruch 5,
**dadurch gekennzeichnet, dass** der weitere 3D-ToF-Sensor (26) derart angeordnet ist, dass er aus einem wesentlich anderen Blickwinkel, insbesondere auf den Messbereich, ausgerichtet ist als der 3D-ToF-Sensor (20).

7. Werkzeugeinstell- und Werkzeugmessgerät (24) zumindest nach Anspruch 2, **dadurch gekennzeichnet, dass** die Messanordnung (14) zumindest eine Scaneinrichtung (30) umfasst, welche dazu vorgesehen ist, zumindest eines der Messsignale ausbildende Messstrahlen (28) des LiDAR-Sensors zu scannen.

8. Werkzeugeinstell- und Werkzeugmessgerät (24) nach einem der vorhergehenden Ansprüche, **dadurch gekennzeichnet, dass** die Messanordnung (14) zusätzlich zumindest eine Durchlichtkamera (32) aufweist.

9. Werkzeugeinstell- und Werkzeugmessgerät (24) nach einem der Ansprüche 1 bis 7, **dadurch gekennzeichnet, dass** die Messanordnung (14) frei von einer Durchlichtkamera, vorzugsweise frei von 2D-Kamerasensoren, ausgebildet ist.

10. Verfahren mit dem Werkzeugeinstell- und Werkzeugmessgerät (24) nach einem der vorhergehenden Ansprüche, **dadurch gekennzeichnet, dass** die ermittelten 3D-Daten oder aus den 3D-Daten ermittelte Informationen oder Parameter an einen Benutzer oder an eine Maschine ausgegeben werden.

11. Verfahren nach Anspruch 10, **dadurch gekennzeichnet, dass** in zumindest einem Verfahrensschritt (34) anhand der ermittelten 3D-Daten Werkzeugtypen, Werkzeuggattungen und/oder Werkzeuggrößenklassen von durch die Messsignale bestrahlten Werkzeugen (10) ermittelt werden.

12. Verfahren nach Anspruch 10 oder 11, **dadurch gekennzeichnet, dass** in zumindest einem Verfahrensschritt (36) anhand der ermittelten 3D-Daten ein Verschleiß von zumindest einem durch die Messsignale bestrahlten Werkzeug (10) ermittelt wird.

13. Verfahren nach einem der Ansprüche 10 bis 12, **dadurch gekennzeichnet, dass** in zumindest einem Verfahrensschritt (38) anhand der ermittelten 3D-Daten mit Werkzeugen (10) bestückte Werkzeugpaletten (40) und/oder unbestückte Werkzeugpaletten (40) erkannt, vorzugsweise unterschieden, werden.

14. Verfahren nach einem der Ansprüche 10 bis 13, **dadurch gekennzeichnet, dass** in zumindest einem Verfahrensschritt (42) anhand der ermittelten 3D-Daten belegte und unbelegte Palettenplätze (44) von Werkzeugpaletten (40) erkannt werden.

15. Verfahren nach Anspruch 14, **dadurch gekennzeichnet, dass** in zumindest einem Verfahrensschritt (46) anhand der ermittelten 3D-Daten eine Belegungsart zumindest eines der belegten Palettenplätze (44) der Werkzeugpaletten (40) erkannt wird.

16. Verfahren nach Anspruch 14 oder 15, **dadurch gekennzeichnet, dass** in zumindest einem Verfahrensschritt (70) anhand der ermittelten 3D-Daten eine Rotations-Ausrichtung von Objekten, insbesondere von Werkzeugaufnahmen (12), in den belegten Palettenplätzen (44) der Werkzeugpaletten (40) erkannt wird.

17. Verfahren nach Anspruch 15 oder 16, **dadurch gekennzeichnet, dass** in zumindest einem weiteren Verfahrensschritt (66) die erkannte Belegungsart mit einer vorgesehenen Belegungsart oder die erkannte Rotations-Ausrichtung mit einer vorgesehenen Rotations-Ausrichtung abgeglichen wird, wobei vorzugsweise bei einer Erkennung einer Nicht-Übereinstimmung von erkannter Belegungsart und vorgesehener Belegungsart oder von erkannter Rotations-Ausrichtung und vorgesehener Rotations-Ausrichtung eine entsprechende Information an den Benutzer oder an die Maschine ausgegeben wird.

18. Verfahren nach einem der Ansprüche 11 bis 17, **dadurch gekennzeichnet, dass** die Ermittlung der Werkzeugtypen, der Werkzeuggattungen, der Werkzeuggrößenklassen und/oder des Verschleißes der Werkzeuge (10) und/oder die Erkennung der Werkzeugpaletten (40), der Belegung der Palettenplätze (44), der Belegungsart der Palettenplätze (44) und/oder der Rotations-Ausrichtung in den Palettenplätzen (44) von jeweils zumindest einem speziell auf die jeweilige Aufgabe trainierten Algorithmus maschinellen Lernens unterstützt oder durchgeführt wird.

19. Recheneinheit (22), welche in das Werkzeugeinstell- und Werkzeugmessgerät (24) nach einem der Ansprüche 1 bis 9 integrierbar ist oder welche mit dem Werkzeugeinstell- und Werkzeugmessgerät (24) nach einem der Ansprüche 1 bis 9 datenübertragungstechnisch verbindbar ist, umfassend zumindest einen Prozessor (48) und zumindest einen Datenspeicher (50) oder eine Datenverbindung zu einem externen Datenspeicher, wobei in dem Datenspeicher (50) ein Betriebsprogramm hinterlegt ist, welches bei einer Ausführung durch den Prozessor (48) dazu vorgesehen ist, das Verfahren nach einem der Ansprüche 10 bis 18 durchzuführen.
